# EUROPEAN PATENT SPECIFICATION

(11) **EP 2 792 579 B1**
(45) Date of publication and mention of the grant of the patent: **03.02.2016**
(21) Application number: 13164111.0
(22) Date of filing: 17.04.2013
(51) Int. Cl.: B62D 35/00

(54) **Device for adjusting the orientation of an aerodynamic add-on of a cabin of an industrial vehicle.**
Vorrichtung zum Einstellen der Ausrichtung eines aerodynamischen Zusatzes eines Führerhauses eines gewerblichen Fahrzeugs
Dispositif d'ajustement de l'orientation d'un supplément aérodynamique pour cabine de véhicule industriel

(43) Date of publication of application: 22.10.2014
(73) Proprietor: IVECO S.p.A., 10156 Torino (IT)
(72) Inventor: Basile, Salvatore, 10040 LEINI' (IT)
(74) Representative: Franzolin, Luigi

(56) References cited:
- EP-A1- 1 561 676
- WO-A1-2007/004953
- DE-A1-102008 056 357
- GB-A- 2 435 246
- US-A- 4 904 015
- US-A1- 2003 227 194
- US-A1- 2010 072 779
- US-A1- 2010 201 152
- US-A1- 2011 241 377

## Description

### Application field of the invention

The present invention refers to the field of wind deflectors, also called aerodynamic add-ons or spoilers, for improving the aerodynamic performance of a vehicle, in particular of the cabin of a tractor semitrailer.

### Description of the prior art

Wind deflectors, also called spoilers, such as those disclosed US2011/0241377 are known in industrial vehicles to improve the aerodynamics of the vehicle.

An upper spoiler is usually arranged above the cabin of the vehicle to join the aerodynamic surface of the cabin with the semitrailer and in general with the loading volume behind the cabin, according to a forward driving direction of the vehicle.

Side spoilers generally obstruct the side space between the cabin and the trailer, in order to avoid generating turbulences.

There are semitrailers having different dimensions. Similarly, container cars have a loading platform on which containers that can have different size are laid.

Thus it is necessary to adjust the orientation of the upper spoiler as a function of the difference in height between the vehicle cabin, for example a tractor, and the loading volume, for example a semitrailer, placed at the back of the cabin. The adjustment of the height of the cabin spoiler of an industrial vehicle derives from the need to improve the aerodynamics and thus the fuel consumption and the general noisiness of the vehicle. The adjustment of the upper spoiler is made by a worm screw or equivalent devices.

In order to make such adjustment, the user, generally the driver, has to climb onto the cabin, possibly using a ladder, to reach such adjustment systems and manually operate them. It may happen that such procedure has to be carried out during the winter, when snow or ice may be stuck to the cabin and/or to the adjustment systems. Such circumstances can be so prohibitive as to discourage the adjustment of the spoiler.

In addition, tractors used for short distance transports are subject to a frequent replacement of the trailers. This implies continuous spoiler regulations, amplifying the discomfort of the aforementioned drawbacks.

It is also worth noting that the position of the operator, while he/she operates the adjustment systems, is not suitable to visually estimate the correct alignment of the spoiler, thus it is appropriate that a second operator, from the ground, indicates the correct position of the spoiler from a more favourable position.

### Summary of the invention

Therefore the aim of the present invention is to provide a device for adjusting the orientation of an aerodynamic add-on of a cabin of an industrial vehicle, in order to make the operation of adapting the spoiler to the trailer easier and more comfortable, solving the problems described above.

The object of the present invention is a device for adjusting the orientation of an aerodynamic add-on of a tractor cabin, in accordance with claim 1.

A further object of the present invention is an orientation method of an aerodynamic add-on of a tractor cabin, by means of at least an alternative embodiment of the aforementioned device.

It is also object of the present invention a vehicle comprising the aforementioned device.

Advantageously it is no longer required that an operator climbs on the roof of a tractor cabin to operate the necessary orientation adjustments of the aerodynamic add-ons connected to the cabin.

The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows a front perspective view of an industrial vehicle comprising a tractor and a trailer on which an alternative embodiment of the device that is object of the present invention is installed;
figure 2 shows the tractor of figure 1, in a rear perspective view;
figure 3 shows a side view of the vehicle of figure 1 and 2.

In the figures the same reference numbers and letters identify the same elements or components.

### Detailed description of preferred embodiments of the invention

According to a first aspect of the present invention, the adjustment of at least a spoiler/wind deflector SR,SL of a cabin C of a tractor TR is servo-controlled. In other words, one or more electric or pneumatic or hydraulic motors D are provided to vary the orientation of said at least a spoiler SR, SL.

In the following, the motor D will indicate a general mechanical device for the adjustment, namely including all the mechanisms moved/operated by the motor, for example worm screws, gears, lever, etc..

At the back of the cabin, a semitrailer T is arranged, whose dimensions may vary and may be standardized.

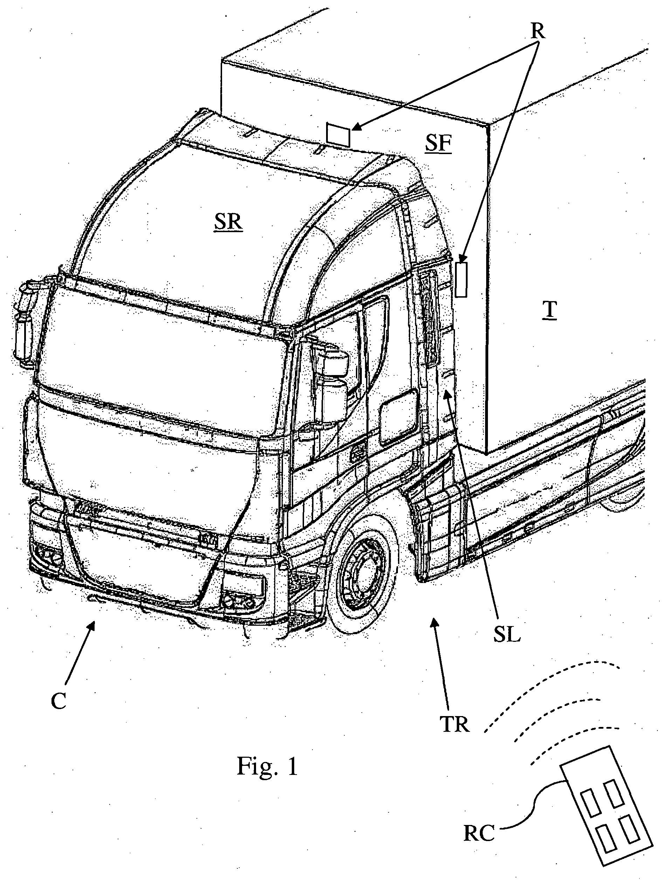

With reference to figure 1, which shows a preferred embodiment of the invention, a cabin C comprises an upper spoiler SR mounted on the roof of the cabin. Side spoilers are mounted in rear part of the cabin C defining an ideal rear extension of the side walls of the cabin. The aim of the spoilers is to join the shape of the cabin to the size of the trailer T pulled by the corresponding tractor TR or of the container laid on the loading platform of an industrial vehicle. The larger the front surface of the trailer is, in aerodynamic terms, with respect to the front surface of the tractor, the more it is necessary to open/raise the spoilers, in order to obtain the aforementioned connection between the surfaces having an aerodynamic impact. Such concept is per se well known.

According to a first preferred alternative embodiment of the invention, the servo-controlled adjustment means of the spoiler tilt with respect to the cabin are manually controlled by means of appropriate buttons arranged, for example, within the cabin, preferably on the dashboard of the tractor. 'Manually controlled' means that it is an operator who determines the start and the stop of the motor(s) D. According to another preferred alternative embodiment of the invention, the position, namely the tilt of at least a spoiler, can be selected in a numerable set of predefined positions. Thus, appropriate storage means can store specific predefined positions of each spoiler. This preferably happens in those countries where the size of the trailers is standardized.

According to another preferred alternative embodiment of the invention, that can be combined with the preceding ones, an either wired or wireless remote controller RC controls the servo-controlled adjustment means D of the spoilers SR, SL, so that the driver can visually verify from the outside of the cabin C the correct connection of the spoilers with the trailer T.

According to the invention, the servo-controlled adjustment means are of the automatic type.

In this case, at least a radar is provided to generate a feedback signal that is necessary to stop the adjustment means once the correct position of the spoilers is reached, as a function of a difference in the cabin size with respect to the loading volume at its back: for example, as a function of the difference in height between trailer/container and cabin, if the spoiler to be adjusted SR is arranged on the roof of the cabin C or as a function of the difference in width between trailer/container and cabin, if the spoiler to be adjusted is arranged as an add-on, SL, of a side wall of the cabin C.

In the following, the expression "to detect the size" will always imply a difference in size, either height or width, between the cabin and the loading volume at the back of the cabin.

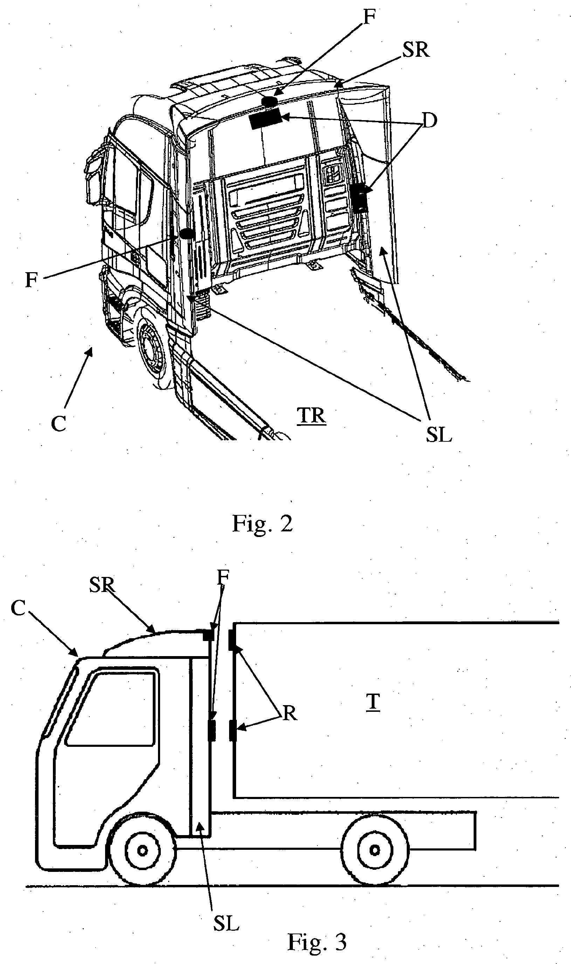

Said radar can comprise at least a photoelectric cell F paired with a reflector R, which serves as target. For example, the photoelectric cell is arranged on the edge at the rear end of the spoiler, according to the driving direction of the vehicle, namely facing the trailer, and the reflector is attached to the front surface SF of the loading volume at the back at the cabin, namely on the surface facing the cabin or viceversa: thus the photoelectric cell F (see figure 2) controls the raising/lowering from an extreme lower/upper position of the spoiler on the roof or the swivelling from an extreme open/closed position of the side spoiler, until its optical signal is reflected from the reflector R. The movement of a side spoiler SL is symmetrical with respect to the movement of the other side spoiler SL. Thus a single alignment radar cooperating with a side spoiler can be enough to obtain the alignment of also the other side spoiler.

An ultrasonic sensor or a camera or a magnetic sensor can be used as an alternative to a photoelectric cell. In the case of a camera, it can be integral directly with the cabin rather than with a spoiler. The presence of a target can be optional in relation to the technology used to detect the size of the trailer T. For example, a system for recognizing the position of the corners of the front surface of the trailer with respect to the camera can be associated to the camera itself. The arrangement of additional targets, such as fluorescent bands or reflectors, can, thus, be optional. Such adjustment operation can be initiated by a start device. Such start device may comprise, for example, a manual button, for example arranged in the cabin, or a device that automatically detects the operation of connecting the trailer to the tractor, for example:
- a switch integral with the fifth wheel which detects the connection of the semitrailer to the tractor,
- a switch on a connector of the pneumatic/electric system of the tractor with the pneumatic/electric system of the trailer.

Or such start device may comprise a switch cooperating with the loading platform of the vehicle and detect when a container is laid on the loading platform of the vehicle.

The control of the servo-controlled adjustment device can be performed by means of processing means, among which one of the several vehicular control units.

A method associated to the control of the device that is object of the present invention can include the following steps:
- start, for example initiated by said start device,
- positioning of the aerodynamic add-on (SR, SL) in extreme position: full lowering/raising or swivelling to a full open/closed position,
- movement of the spoiler until a feedback signal is received by said radar indicating a correct orientation of the spoiler as a function of the size of the surface SF of the loading volume at the back at the cabin.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present application.

## Claims

1. Device for adjusting the orientation of an aerodynamic add-on (SR, SL) of a cabin (C) of an industrial vehicle (TR) as a function of a difference in aerodynamic size between said cabin and a loading volume (T) at the back of the cabin (C) according to a driving direction of the vehicle, the device comprising servo-controlled activation means (D) for adjusting the orientation of the aerodynamic add-on (SR, SL), control means to automatically control said servo-controlled adjustment means (D) wherein said control means comprise at least a radar (F, D) to detect a correct alignment of said aerodynamic add-on as a function of a difference in size between said cabin (C) and said rear loading volume (TR), **characterized in that** said activation means (D) are such to symmetrically move left and right side spoilers (SL) of the aerodynamic add-on and **in that** the control means comprise a single radar cooperating with one of the side spoilers to obtain the alignment of also the other side spoiler.

2. Device according to claim 1, wherein said servo-controlled adjustment means (D) comprise:
- an electric actuator; and/or
- a pneumatic actuator; and/or
- a hydraulic actuator.

3. Device according to one of the preceding claims, wherein said servo-controlled adjustment means can be controlled manually by means of at least a button.

4. Device according to claim 3, further comprising storage means, storing a numerable set of predefined positions of said aerodynamic add-on and means for selecting one of said predefined positions.

5. Device according to one of the previous claims, wherein said appropriate button is connected with said servo-controlled activation means by means of a remote controller (RC) of the wired or wireless type.

6. Device according to any of the previous claims, wherein said radar comprises:
- a first part (F) integral with a rear wall of the cabin (C) or integral with said aerodynamic add-on (SR, SL) and optionally;
- a second part (R) integral with a front surface (SF) of the trailer (T).

7. Device according to claim 6, wherein said first part (F) comprises:
- a photoelectric cell; and/or
- an ultrasonic sensor; and/or
- a camera; and/or
- a magnetic sensor and/or said second part (R) comprising a respective target cooperating with said first part.

8. Device according to one of the previous claims, wherein said control means further comprise start means to determine an activation of an adjustment procedure of the orientation of said aerodynamic add-on (SR, SL).

9. Device according to claim 8, wherein said start means comprise:
- a manual button, or
- a switch integral with the fifth wheel which detects the connection of the semitrailer to the tractor,
- a switch with a connector of a pneumatic and/or electric system of the tractor with the pneumatic and/or electric system of the trailer or
- a switch cooperating with the loading platform of the vehicle and suitable to detect when a container is laid on the loading platform of the vehicle.

10. Device according to any one of the previous claims configured to perform the aforementioned steps:
- start, for example initiated by said start means,
- positioning of the aerodynamic add-on (SR, SL) in extreme position: of full lowering/raising or of swivelling to a full open/closed position,
- movement of the spoiler until a feedback signal from said radar is received, indicating a correct orientation of the respective aerodynamic add-on (SR, SL).

11. Industrial vehicle comprising a cabin (C) having an aerodynamic add-on (SR, SL) adjustable as a function of a difference in aerodynamic size between said cabin and a loading volume (TR) at the back of the cabin according to a driving direction of the vehicle and **characterized in that** it comprises a device for adjusting the orientation of the aerodynamic add-on (SR, SL) according to one of the claims from 1 to 10.

## Patentansprüche

1. Vorrichtung zur Einstellung der Orientierung eines aerodynamischen Aufsatzes (SR,SL) einer Kabine (C) eines Nutzfahrzeugs (TR) als eine Funktion einer Differenz der aerodynamischen Größe zwischen der Kabine und einem Lastvolumen (T) an der Rückseite der Kabine (C) entsprechend einer Fahrtrichtung des Fahrzeugs, welche Vorrichtung servogesteuerte Aktivierungsmittel (D) zur Einstellung der Orientierung des aerodynamischen Aufsatzes (SR,SL) umfasst, sowie Steuermittel zur automatischen Steuerung der servogesteuerten Einstellmittel (D), wobei die Steuermittel zumindest ein Radar (F,D) zur Detektion einer korrekten Ausrichtung eines aerodynamischen Aufsatzes als eine Funktion einer Differenz in der Größe zwischen der Kabine (C) und dem hinteren Lastvolumen (TR) umfassen, **dadurch gekennzeichnet, dass** die Aktivierungsmittel (D) derart vorgesehen sind, dass sie symmetrisch linke und rechte Seitenspoiler (SL) des aerodynamischen Aufsatzes bewegen, und dass die Steuermittel ein einziges Radar umfassen, das mit einem der Seitenspoiler derart zusammenwirkt, dass die Ausrichtung auch des anderen Seitenspoilers erhalten wird.

2. Vorrichtung gemäß Anspruch 1, bei welcher die semogesteuerten Einstellmittel (D) umfassen:
- ein elektrisches Stellorgan; und/oder
- ein pneumatisches Stellorgan; und/oder
- ein hydraulisches Stellorgan.

3. Vorrichtung gemäß einem der vorhergehenden Ansprüche, bei welcher die servogesteuerten Einstellmittel manuell mittels zumindest eines Knopfes gesteuert werden können.

4. Vorrichtung gemäß Anspruch 3, ferner umfassend Speichermittel, welche einen zählbaren Satz vorbestimmter Positionen des aerodynamischen Aufsatzes speichern, und Mittel zur Auswahl einer der vorbestimmten Positionen.

5. Vorrichtung gemäß einem der vorhergehenden Ansprüche, bei welcher der entsprechende Knopf mit den semogesteuerten Aktivierungsmitteln durch eine Fernsteuerung (RC) vom draht-gebundenen oder drahtlosen Typ verbunden ist.

6. Vorrichtung gemäß einem der vorhergehenden Ansprüche, bei welcher das Radar umfasst:
- einen ersten Teil (F), der einteilig mit der Rückwand der Kabine (C) oder einteilig mit dem aerodynamischen Aufsatz (SR,SL) vorgesehen ist und optional ist;
- einen zweiten Teil (R), der einteilig mit einer Frontfläche (SF) des Anhängers (T) vorgesehen ist.

7. Vorrichtung gemäß Anspruch 6, bei welcher der erste Teil (F) umfasst:
- eine fotoelektrische Zelle; und/oder
- einen Ultraschallsensor; und/oder
- eine Kamera; und/oder
- einen Magnetsensor und/oder einen zweiten Teil (R) umfassend ein entsprechendes Ziel, das mit dem ersten Teil zusammenwirkt.

8. Vorrichtung gemäß einem der vorhergehenden Ansprüche, bei welcher die Steuermittel ferner Startmittel zur Bestimmung einer Aktivierung eines Einstellvorgangs der Ausrichtung des aerodynamischen Aufsatzes (SR,SL) umfassen.

9. Vorrichtung gemäß Anspruch 8, bei welcher die Startmittel umfassen:
- einen manuellen Knopf, oder
- einen Schalter, der einteilig mit dem fünften Rad vorgesehen ist, welches die Verbindung des Aufliegers mit der Zugmaschine feststellt,
- einen Schalter mit einem Verbinder eines pneumatischen und/oder elektrischen Systems der Zugmaschine mit dem pneumatischen und/oder elektrischen System der Zugmaschine oder
- einen Schalter, der mit der Ladefläche des Fahrzeugs zusammenwirkt und dazu geeignet ist, festzustellen, wenn ein Behälter auf die Ladefläche des Fahrzeugs geladen ist.

10. Vorrichtung gemäß einem der vorhergehenden Ansprüche, vorgesehen zur Durchführung der folgenden Schritte:
- Start, beispielsweise ausgelöst durch Startmittel,
- Positionierung des aerodynamischen Aufsatzes (SR,SL) in einer extremen Position der vollen Absenkung/Anhebung oder Schwenkens in eine voll geöffnete/geschlossene Position,
- Bewegung des Spoilers, bis ein Rückkopplungssignal von dem Radar erhalten wird, welches eine korrekte Orientierung des entsprechenden aerodynamischen Aufsatzes (SR,SL) anzeigt.

11. Nutzfahrzeug, umfassend eine Kabine (C) mit einem aerodynamischen Aufsatz (SR,SL), der einstellbar ist als eine Funktion einer Differenz in einer aerodynamischen Größe zwischen der Kabine und einem Lastvolumen (TR) an der Rückseite der Kabine entsprechend einer Fahrtrichtung des Fahrzeugs, **dadurch gekennzeichnet, dass** es eine Vorrichtung zur Einstellung der Orientierung des aerodynamischen Aufsatzes (SR,SL) entsprechend einem der Ansprüche 1 bis 10 umfasst.

## Revendications

1. Dispositif pour ajuster l'orientation d'un supplément aérodynamique (SR, SL) d'une cabine (C) d'un véhicule industriel (TR) en fonction d'une différence de taille aérodynamique entre ladite cabine et un volume de chargement (T) à l'arrière de la cabine (C) selon une direction de conduite du véhicule, le dispositif comprenant un moyen d'activation à servocommande (D) pour ajuster l'orientation du supplément aérodynamique (SR, SL), un moyen de commande pour commander automatiquement ledit moyen d'ajustement à servocommande (D) dans lequel ledit moyen de commande comprend au moins un radar (F, D) pour détecter un alignement correct dudit supplément aérodynamique en fonction d'une différence de taille entre ladite cabine (C) et ledit volume de chargement arrière (TR), **caractérisé en ce que** ledit moyen d'activation (D) est tel qu'il déplace symétriquement des ailerons latéraux gauche et droit (SL) du supplément aérodynamique et **en ce que** le moyen de commande comprend un simple radar coopérant avec l'un des ailerons latéraux afin d'obtenir l'alignement d'également l'autre aileron latéral.

2. Dispositif selon la revendication 1, dans lequel ledit moyen d'ajustement à servocommande (D) comprend :
- un actionneur électrique ; et/ou
- un actionneur pneumatique ; et/ou
- un actionneur hydraulique.

3. Dispositif selon l'une des revendications précédentes, dans lequel ledit moyen d'ajustement à servocommande peut être commandé manuellement à l'aide d'au moins un bouton.

4. Dispositif selon la revendication 3, comprenant en outre un moyen de stockage, stockant un ensemble dénombrable de positions prédéfinies dudit supplément aérodynamique et un moyen pour sélectionner l'une desdites positions prédéfinies.

5. Dispositif selon l'une des revendications précédentes, dans lequel ledit bouton approprié est connecté audit moyen d'activation à servocommande à l'aide d'un dispositif de commande à distance (RC) du type câblé ou sans fil.

6. Dispositif selon l'une quelconque des revendications précédentes, dans lequel ledit radar comprend :
- une première partie (F) intégrée à une paroi arrière de la cabine (C) ou intégrée audit supplément aérodynamique (SR, SL) et en option ;
- une seconde partie (R) intégré à une surface avant (SF) de la remorque (T).

7. Dispositif selon la revendication 6, dans lequel ladite première partie (F) comprend :
- une cellule photoélectrique ; et/ou
- un capteur à ultrasons ; et/ou
- une caméra ; et/ou
- un capteur magnétique et/ou ladite seconde partie (R) comprenant une cible respective coopérant avec ladite première partie.

8. Dispositif selon l'une des revendications précédentes, dans lequel ledit moyen de commande comprend en outre un moyen de démarrage pour déterminer une activation d'une procédure d'ajustement de l'orientation dudit supplément aérodynamique (SR, SL).

9. Dispositif selon la revendication 8, dans lequel ledit moyen de démarrage comprend :
- un bouton manuel, ou
- un commutateur intégré à la cinquième roue qui détecte la connexion de la semi-remorque au tracteur,
- un commutateur avec un connecteur d'un système pneumatique et/ou électrique du tracteur au système pneumatique et/ou électrique de la remorque ou
- un commutateur coopérant avec la plateforme de chargement du véhicule et approprié pour détecter quand un conteneur est posé sur ladite plateforme de chargement du véhicule.

10. Dispositif selon l'une quelconque des revendications précédentes configuré pour effectuer les étapes précitées :
- le démarrage, par exemple initié par ledit moyen de démarrage,
- le positionnement du supplément aérodynamique (SR, SL) dans une position extrême : d'abaissement/élévation total ou de pivotement jusqu'à une position ouverte/fermée totale,
- le déplacement de l'aileron jusqu'à ce qu'un signal de retour provenant dudit radar soit reçu, indiquant une orientation correcte du supplément aérodynamique respectif (SR, SL).

11. Véhicule industriel comprenant une cabine (C) ayant un supplément aérodynamique (SR, SL) ajustable en fonction d'une différence de taille aérodynamique entre ladite cabine et un volume de chargement (TR) l'arrière de la cabine selon une direction de conduite du véhicule et **caractérisé en ce qu'**il comprend un dispositif pour ajuster l'orientation du supplément aérodynamique (SR, SL) selon l'une des revendications 1 à 10.
